# EUROPEAN PATENT APPLICATION

(11) **EP 2 439 341 A1**
(43) Date of publication of application: **11.04.2012**
(21) Application number: 10186828.9
(22) Date of filing: 07.10.2010
(51) Int. Cl.: E02B 15/04

(54) **Removing oil from the surface of a body of water**

(71) Applicant: Vetco Gray Controls Limited, Bristol BS48 1BS (GB)
(72) Inventor: Packham, Andrew Robert, Chippenham, Wiltshire SN14 0HG (GB)
(74) Representative: Emerson, Peter James

(57) **Abstract**

A system for removing oil from the surface (9) of a body of water comprises: a vessel (2) floatable on the body of water; a plurality of booms (3) floatable on the surface and movable by the vessel for collecting oil on the surface; a movable continuous belt (7) carried by the vessel for skimming oil collected by the booms; and means (8, 13) for removing oil from the belt which has been skimmed from the surface.

## Description

### Field of the Invention

The present invention relates to removing oil from the surface of a body of water.

### Background of the Invention

Environmental pollution by oil spillage can cause a wide range of damage in the marine environment. Major oil spills, for example from oil tankers, are now exceptionally rare but when they occur they can cause serious marine environmental pollution in a very short time.

When oil is spilled on the sea surface, it spreads rapidly and after a few hours it can cover an area of several square miles with large variations in oil thickness. This can limit the effectiveness of all clean-up techniques at sea. The oil also suffers chemical and physical changes and can absorb up to four times its own volume of water.

Two main clean-up methods are available, containment and recovery of the oil, and chemical dispersion. Although other methods, such as in-situ burning, are available these have serious limitations. Recovery of the oil is a more environmentally friendly method and is more favoured in the current climate.

Containment and recovery usually involves the use of floating booms to first encircle and contain the oil within an area of sea so that recovery can begin. There are several methods of recovering the oil available, which usually involve first capturing the oil and seawater mixture and then separating the water out and returning it to the sea. Alternatively, the mixture can be transported to the shore for suitable disposal or separation. However, it is important to choose recovery equipment which can operate with the type of oil spilled and in the prevailing weather and sea conditions.

One of the main recovery methods is to use an oil skimming technique which skims the top layer of fluid from the water. The simplest skimmers are suction devices which remove oil from the water surface. However, most effective sea skimmers are usually made of material to which oil is attracted and to which it sticks whereas the seawater is unaffected. These skimmers usually employ continuous belts or ropes and others employ brushes or mops. Existing oil skimming looped belts are short in length and run on rollers, with one end of the belt dipping into the sea attracting and collecting oil from the surface. The oil is then squeezed out of the belt when it returns into apparatus on board a vessel. Since such devices are fixed to a vessel, their performance is affected by sea motion.

Looped rope skimmers cast the rope ahead of the vessel and draw the oil into a separator mounted on the vessel but this process takes approximately nine minutes before the rope can be redeployed.

### Summary of the Invention

According to the present invention from one aspect, there is provided a method of removing oil from the surface of a body of water, comprising:
collecting oil on the surface using a plurality of floating booms moved by a vessel floating on the surface;
skimming oil collected by the booms using a moving continuous belt carried by the vessel; and
removing oil from the belt which has been skimmed from the surface.

The booms could comprise first and second booms each extending outwardly from the vessel at an angle relative to a longitudinal centre line of the vessel.

Oil from the belt which has been skimmed from the surface could be removed from the belt on the vessel.

Oil removed from the belt could be received in containment means carried by the vessel.

Oil which has been skimmed from the surface could be removed from the belt by squeezing the belt.

Preferably, the belt extends outwards from the vessel, downwards to the surface, along the surface for a distance and back to the vessel.

The booms could be tethered to rigid arms carried by the vessel.

According to the present invention from another aspect, there is provided a system for removing oil from the surface of a body of water, comprising:
a vessel floatable on the body of water;
a plurality of booms floatable on the surface and movable by the vessel for collecting oil on the surface;
a movable continuous belt carried by the vessel for skimming oil collected by the booms; and
means for removing oil from the belt which has been skimmed from the surface.

The booms could comprise first and second booms each extending outwardly from the vessel at an angle relative to a longitudinal centre line of the vessel.

The removing means could be carried by the vessel.

The system could include containment means carried by the vessel for receiving oil which has been removed from the belt.

The removing means could comprise means for squeezing oil from the belt.

Preferably, the belt is disposed for extending outwards from the vessel, downwards to the surface, along the surface for a distance and back to the vessel.

The booms could be tethered to rigid arms carried by the vessel.

The outer end of at least one of the booms could be linked or attached to the outer end of a boom of another vessel of a method or system according to the invention.

According to the present invention from a further aspect, there is provided apparatus for use in removing oil from the surface of a body of water, comprising:
a plurality of booms floatable on the surface and which can be moved by a vessel, for collecting oil on the surface;
a movable continuous belt which can be carried by such a vessel, for skimming oil collected by the booms; and
means for removing oil from the belt which has been skimmed from the surface.

The booms could comprise first and second booms which can extend outwardly from such a vessel at an angle relative to a longitudinal centre line of the vessel.

The apparatus could include containment means which can be carried by such a vessel, for receiving oil which has been removed from the belt.

The removing means could comprise means for squeezing oil from the belt.

Preferably, the belt can be disposed for extending outwards from a vessel, downwards to the surface, along the surface for a distance and back to the vessel.

The booms could be tethered to rigid arms which can be carried by such a vessel.

The present invention, which can use a custom-built vessel or the retrofitting of an existing vessel, combines or integrates both the containment of oil, using floating booms to capture the oil, and the recovery of the oil based liquid mixture from the sea surface using a belt skimmer. The oil can then be collected into containment means on board a vessel for disposal or separation.

In an embodiment of the present invention, two floating booms act as a funnel to guide surface oil into a recovery arrangement which utilises an oil absorbent wide continuous loop belt which is dropped on to the sea surface at some distance ahead of the carrying vessel where it floats on the surface, collecting oil until it is recovered into the vessel. In addition, as the floating belt is drawn towards the vessel, it has the effect of drawing surface liquid towards the vessel for oil to be skimmed off by the belt.

### Brief Description of the Drawings

Fig. 1 is a schematic diagram of a floating boom arrangement of an embodiment of the invention;
Fig. 2 is a schematic diagram of an oil skimmer arrangement of the embodiment; and
Fig. 3 is a plan view of two systems according to the invention adjacent each other.

### Description of an Embodiment of the Invention.

The system to be described comprises essentially two arrangements, a floating boom arrangement and a floating belt skimmer arrangement. The complete system can be designed to enable it to be carried on board a vessel and deployed when needed and the method of mounting can be adapted for different types of vessel. The operation is continuous, unlike a rope skimmer which has to be repeatedly redeployed once recovered.

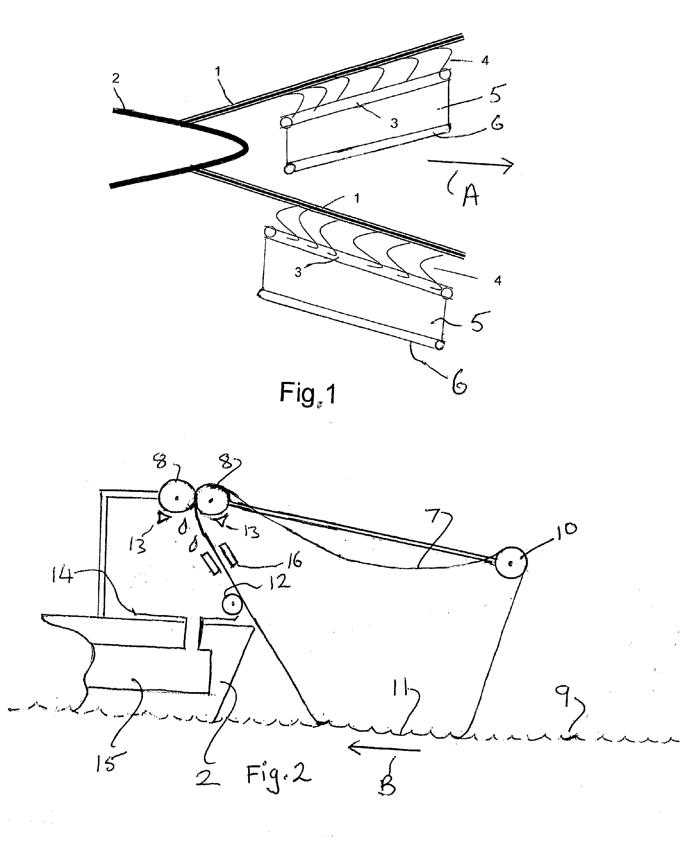

Fig. 1 shows a floating boom arrangement which includes two rigid arms 1 mounted at or near the forward end of a vessel 2 in its direction of movement and suitably angularly positioned, that is each arm 1 extends outwardly at an angle relative to the longitudinal centre line of the vessel to define a generally V-shaped area in front of the vessel as it moves in the direction of arrow A. The vessel 2 could be a self-propelled vessel or a vessel such as a floating pontoon moved by another vessel. Floating booms 3 are attached to the rigid arms by means of tethering ropes 4 so that, when the booms 3 are floating on the sea surface, the ropes 4 are slack and allow the booms 3 to move up and down with sea motion. The booms 3 are held by the rigid arms 1 so that they, like the arms, each extend outwardly at an angle relative to the longitudinal centre line of the vessel 2 so that they act as a funnel guiding surface oil towards recovery equipment on the vessel 2 as the latter moves forward in the direction of arrow A. Typically, each boom 3 has a curtain 5 hanging below it and weighted by a weight 6.

Referring to Fig. 2, mounted at or near the forward end of vessel 2 in its normal direction of movement is separation equipment through which extends a wide, continuous loop belt 7 moved electrically or hydraulically, More particularly, the belt 7 passes between gantry mounted pinch rollers 8 carried by the vessel and extends beyond the vessel 2 by several metres over the sea surface 9 around a gantry mounted roller 10 carried by the vessel 2 down to the sea surface, back along the sea surface for a distance (see portion 11 of the belt floating on surface 9) and towards the vessel 2 via a tensioning roller 12. As belt 7 passes between pinch rollers 8, oil from the belt picked up from the sea surface is squeezed from it by rollers 8. Scrapers 13 carried by the vessel guide such oil to a tray 14, from which the oil passes to a container 15 in the vessel 2 for storage, possibly being filtered before reaching the container. Reference numeral 16 denotes means for removing debris from the belt 7 before it reaches rollers 8.

When the skimmer arrangement is deployed, the continuous loop belt 7 drops down on to the sea surface 9 between the booms 3 several metres distance ahead of the vessel, the latter moving in a direction from left to right in Fig. 2. The portion 11 floats on the sea surface 9, the belt moving along the sea in the direction of arrow B, rising and falling with the sea motion. Portion 11 floats on the sea surface for a distance of several metres, a greater amount than in the case of conventional skimming belts. Oil on the sea surface is attracted to and absorbed by the belt 6, which is then drawn up between rollers 8 which remove oil from the belt 7 by squeezing, assisted by the scrapers 13. Typically, the belt 7 can be made of polypropylene mesh or foam, or any other material that will absorb oil and retain its absorbency properties over a reasonable period of time after regular squeezing.

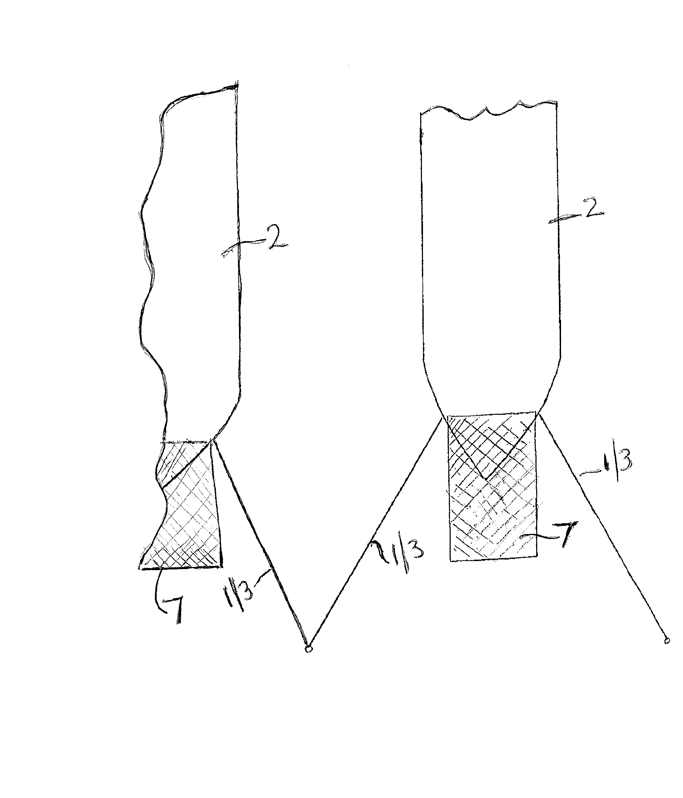

The outer end of at least one of the booms 3 could be linked or attached to the outer end of one of the booms of an adjacent such vessel as schematically shown by Fig. 3.

### Advantages of using the Invention

In practice, the most efficient recovery of oil with existing oil skimmers is only achieved under calm conditions. Winds, currents and wave actions seriously reduce the ability of existing designs of skimmers to recover oil. The present invention provides for an improvement on previous designs in this respect in that it can cope with wave motion.

The system described is an improvement on most existing systems in that it combines containment and recovery in one operation.

By allowing the belt to float, more time can be allowed for oil to be in contact with and stick to the belt.

The movement of the belt along the sea surface also has the effect of drawing surface liquid towards a vessel for oil to be skimmed off by the belt.

## Claims

1. A method of removing oil from the surface of a body of water, comprising:
collecting oil on the surface using a plurality of floating booms moved by a vessel floating on the surface;
skimming oil collected by the booms using a moving continuous belt carried by the vessel; and
removing oil from the belt which has been skimmed from the surface.

2. A method according to claim 1, wherein the booms comprise first and second booms each extending outwardly from the vessel at an angle relative to a longitudinal centre line of the vessel

3. A method according to claim 1 or 2, wherein oil from the belt which has been skimmed from the surface is removed from the belt on the vessel.

4. A method according to any preceding claim, wherein oil removed from the belt is received in containment means carried by the vessel.

5. A method according to any preceding claim, wherein oil which has been skimmed from the surface is removed from the belt by squeezing the belt.

6. A method according to any preceding claim, wherein the belt extends outwards from the vessel, downwards to the surface, along the surface for a distance and back to the vessel.

7. A method according to any preceding claim, wherein the booms are tethered to rigid arms carried by the vessel.

8. A system for removing oil from the surface of a body of water, comprising:
a vessel floatable on the body of water;
a plurality of booms floatable on the surface and movable by the vessel for collecting oil on the surface;
a movable continuous belt carried by the vessel for skimming oil collected by the booms; and
means for removing oil from the belt which has been skimmed from the surface.

9. A system according to claim 8, wherein the booms comprise first and second booms each extending outwardly from the vessel at an angle relative to a longitudinal centre line of the vessel.

10. A system according to claim 8 or 9, wherein the removing means is carried by the vessel.

11. A system according to any of claims 8 to 10, including containment means carried by the vessel for receiving oil which has been removed from the belt.

12. A system according to any of claims 8 to 11, wherein the removing means comprises means for squeezing oil from the belt.

13. A system according to any of claims 8 to 12, wherein the belt is disposed for extending outwards from the vessel, downwards to the surface, along the surface for a distance and back to the vessel.

14. A system according to any of claims 8 to 13, wherein the booms are tethered to rigid arms carried by the vessel.

15. Apparatus for use in removing oil from the surface of a body of water, comprising:
a plurality of booms floatable on the surface and which can be moved by a vessel, for collecting oil on the surface;
a movable continuous belt which can be carried by such a vessel, for skimming oil collected by the booms; and
means for removing oil from the belt which has been skimmed from the surface.

16. Apparatus according to claim 15, wherein the booms comprise first and second booms which can extend outwardly from such a vessel at an angle relative to a longitudinal centre line of the vessel.

17. Apparatus according to claim 15 or 16, including containment means which can be carried by such a vessel, for receiving oil which has been removed from the belt.

18. Apparatus according to any of claims 15 to 17, wherein the removing means comprises means for squeezing oil from the belt.

19. Apparatus according to any of claims 15 to 18, wherein the belt can be disposed for extending outwards from such a vessel, downwards to the surface, along the surface for a distance and back to the vessel.

20. Apparatus according to any of claims 15 to 19, wherein the booms are tethered to rigid arms which can be carried by such a vessel.
